# EUROPEAN PATENT APPLICATION

(11) **EP 3 726 653 A1**
(43) Date of publication of application: **21.10.2020**
(21) Application number: 19213932.7
(22) Date of filing: 05.12.2019
(51) Int. Cl.: H01Q 1/38, H01Q 1/48, H01Q 1/52, H01Q 19/00, H01Q 23/00

(54) **ANTENNA WITH ANTI-INTERFERENCE ARRANGEMENT AND MANUFACTURING METHOD THEREOF**

(30) Priority: 19.04.2019 CN 201910317039
(71) Applicant: Shenzhen Merrytek Technology Co., Ltd, Shenzhen, Guangdong 518127 (CN)
(72) Inventor: ZOU, Gaodi, Shenzhen, 518127 (CN); ZOU, Xin, Shenzhen, 518127 (CN)
(74) Representative: Casalonga

(57) **Abstract**

An antenna includes a substrate forming a radiation clearance, a reference ground, a shielding ground, a radiation source and a driver circuit electrically connected to a feed point of the radiation source. The radiation source and the reference ground are located adjacent with each other and retained at an upper surface of the substrate. The reference ground and the driver circuit are located adjacent with each other and retained at a lower surface of the substrate. In response to a thickness direction of the antenna, the radiation source and the reference ground are located corresponding to each other to enable the substrate being located between the radiation source and the reference ground to form the radiation clearance. The shielding ground and the driver circuit are located corresponding to each other to allow the shielding ground suppressing stray electromagnetic radiation generated by the driver circuit.

## Description

### BACKGROUND OF THE PRESENT INVENTION

### FIELD OF INVENTION

The present invention relates to an antenna, and more particularly to an antenna with an anti-interference arrangement, a manufacturing method thereof and an anti-interference method.

### DESCRIPTION OF RELATED ARTS

Since microwave detection technology is capable of predicting user's intention through the detection of the human activities within a detection area by transmitting a detection microwave therewith, microwave detection technology may have wide application prospects in the field of smart home applications in the future, wherein the microwave antenna is a basic hardware of a microwave detection system that is configured for emitting microwave signal and receiving detection signal in order to subsequently detect the human activities according to the microwave signals detected by the antenna.

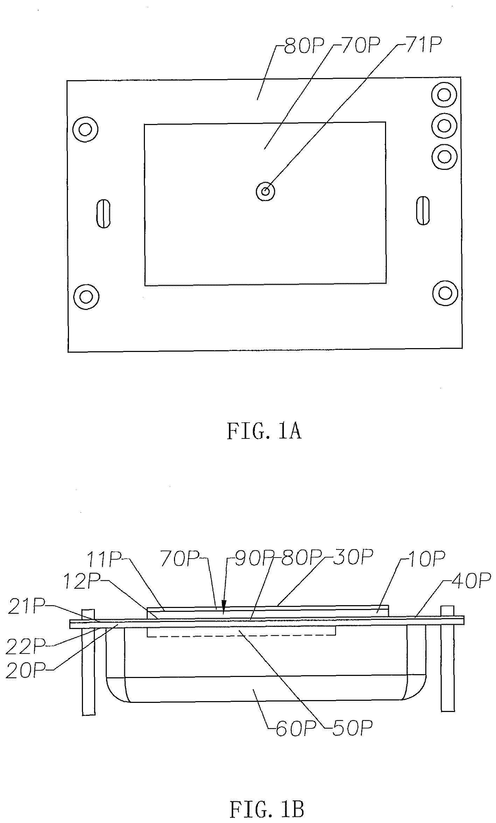

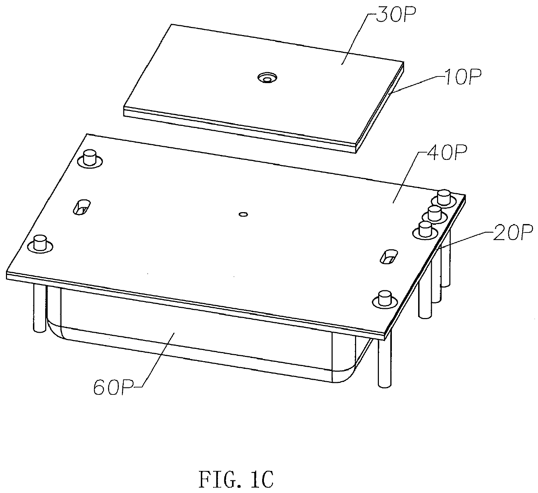

As shown in Figs. 1A, 1B and 1C, a conventional antenna with a double-layer structure are illustrated, wherein the antenna comprises a first substrate 10P, a second substrate 20P, a first copper plate 30P, a second copper plate 40P, a driver circuit 50P and a shielding cover 60P. The first substrate 10P has an upper surface 11P and a corresponding lower surface 12P. The first copper plate 30P is mounted on the upper surface 11P of the first substrate 10P. The second substrate 20P has a top portion 21P and a corresponding bottom portion 22P, wherein the second copper plate 40P is attached on the top portion 21P of the second substrate 20P. The driver circuit 50P is retained at the bottom portion 22P of the second substrate 20P. The lower surface 12P of the first substrate 10P is attached on the second copper plate 40P, such that the first copper plate 30P is defined as and forms a radiation source 70P of the antenna. The second copper plate 40P forms a reference ground 80P of the antenna, wherein the first substrate 10P forms a radiation clearance 90P of the antenna. The driver circuit 50P is extended through the second substrate 20P and the first substrate 10P, wherein the driver circuit 50P is electrically connected to a feed point 71P of the radiation source 70P. The shielding cover 60P is soldered to the second substrate 20P, wherein the shielding cover 60P covers the driver circuit 50P to shield the stray electromagnetic wave radiation generated by the driver circuit 50P when an excitation signal is input.

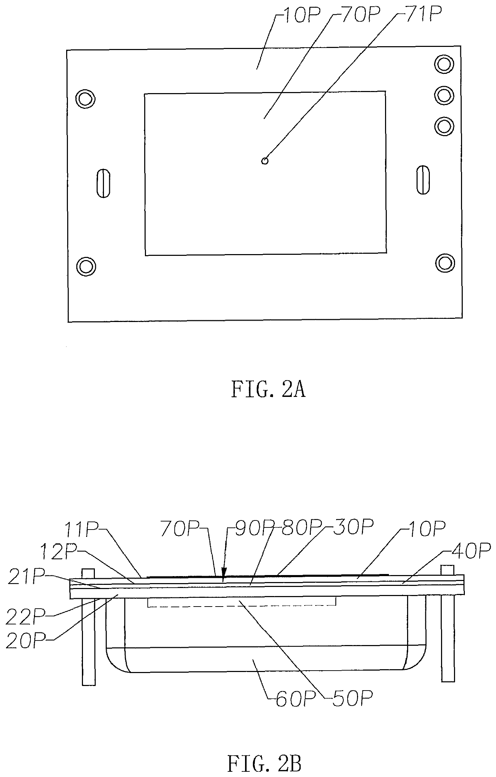

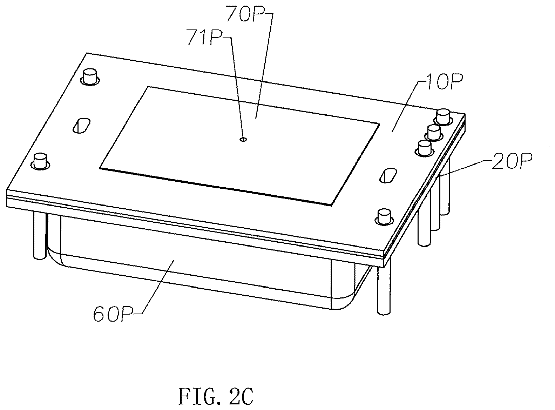

As shown in Figs. 2A, 2B and 2C, another conventional antenna with a laminated structure are illustrated, wherein, similar to the antenna as shown in Figs. 1A to 1C, the antenna comprises a first substrate 10P, a second substrate 20P, a first copper plate 30P, a second copper plate 40P, a driver circuit 50P, and a shielding cover 60P. The first copper plate 30P is attached on the upper surface 11P of the first substrate 10P, and the second copper plate 40P is attached on the lower surface 12P of the first substrate 10P. The driver circuit 50P is retained at the bottom portion 22P of the second substrate 20P, wherein the second substrate 20P and the first substrate 10P are laminated together at a position that the top portion 21P of the second substrate 20P is overlapped on the second copper plate 40P, such that the first copper plate 30P forms the radiation source 70P of the antenna, and the second copper plate 40P forms the reference ground 80P of the antenna, wherein the first substrate 10P forms the radiation clearance 90P of the antenna. The driver circuit 50P is extended through the second substrate 20P and the first substrate 10P, wherein the driver circuit 50P is electrically connected to the feeding point 71P of the radiation source 70P. The shielding cover 60P is soldered to the second substrate 20P, wherein the shielding cover 60P covers the driver circuit 50P to shield stray electromagnetic radiation generated by the driver circuit 50P when an excitation signal is input.

It is worth mentioning that either the antenna with the double-layer structure as shown in Figs. 1A to 1C or the antenna with the laminated structure as shown in Figs. 2A to 2C requires two substrates, i.e. the first and second substrates. In other words, the antenna must be configured to have the first substrate 10P and the second substrate 20P, such that it is a material waste for the antenna, the thickness of the antenna cannot be reduced, and the manufacturing process of the conventional antenna is more complicated.

### SUMMARY OF THE PRESENT INVENTION

The invention is advantageous in that it provides an antenna with an anti-interference arrangement and an anti-interference method thereof, wherein the antenna comprises only one single substrate to effectively reduce the thickness of the antenna so as to form a compact and ultra-thin antenna.

Another advantage of the invention is to provide an antenna with an anti-interference arrangement and an anti-interference method thereof, wherein the antenna comprises only one single substrate to minimize the material cost of the antenna and to reduce the manufacturing cost of the antenna.

Another advantage of the invention is to provide an antenna with an anti-interference arrangement and an anti-interference method thereof, wherein the antenna comprises a radiation source and a reference ground. The radiation source and the reference ground are retained at the same substrate that the radiation source and the reference ground are retained at different surfaces of the substrate to form a radiation gap therebetween so as to ensure a stable and regular operation of the antenna. For example, the radiation source and the reference ground are coupled at two metal layers attached to different sides of the same substrate respectively to achieve a better stabilization for the antenna.

Another advantage of the invention is to provide an antenna with an anti-interference arrangement and an anti-interference method thereof, wherein the antenna further comprises a shielding ground and a driver circuit. The shielding ground and the radiation source are spacedly retained at an upper surface of the substrate. The driver circuit and the reference ground are spacedly retained at a lower surface of the substrate. According to a thickness direction of the antenna, the shielding ground and the driver circuit are configured and equipped correspondingly with each other to suppress the stray electromagnetic radiation generated by the driver circuit through the shielding ground so as to minimize the interference of the antenna and enhance a stabilization of the antenna during operation.

Another advantage of the invention is to provide an antenna with an anti-interference arrangement and an anti-interference method thereof, wherein the shielding ground and the radiation source are formed by a metal layer attached to the upper surface of the substrate at the same time. For example, through etching the metal layer on the upper surface of the substrate, the shielding ground and the radiation source are formed on the upper surface of the substrate at the same time to reduce the manufacturing cost of the antenna.

Another advantage of the invention is to provide an antenna with an anti-interference arrangement and an anti-interference method thereof, wherein the radiation source is electrically grounded to reduce the impedance of the antenna. For example, by electrically connecting the radiation source and the reference ground to electrically ground the radiation source, the impedance of the antenna can be reduced to improve the anti-interference capability of the antenna.

Another advantage of the invention is to provide an antenna with an anti-interference arrangement and an anti-interference method thereof, wherein the antenna further comprises a suppression fence surrounding the driver circuit to suppress the stray electromagnetic wave radiation generated by the driver circuit, so as to enhance the stabilization of the antenna during operation.

Another advantage of the invention is to provide an antenna with an anti-interference arrangement and an anti-interference method thereof, wherein the suppression fence comprises a plurality of fencing bodies extending from the shielding ground to the lower surface of the substrate in order to surround the driver circuit, such that the shielding ground and the fencing bodies cooperate with each other to provide the suppressing effect of the stray electromagnetic wave radiation generated by the driver circuit.

According to the present invention, the foregoing and other objects and advantages are attained by an antenna, which comprises a substrate forming a radiation clearance, wherein the substrate has an upper surface and a lower surface. The antenna further comprises:
a reference ground;
a shielding ground;
a radiation source having a feed point; and
a driver circuit electrically connected to the feed point of the radiation source.

In which, the radiation source and the shielding ground are retained at the upper surface of the substrate and are positioned adjacent to each other. The reference ground and the driver circuit are retained at the lower surface of the substrate and are positioned adjacent to each other. The location of the radiation source and the location of the reference ground are aligned with each other with respect to a thickness direction of the substrate to define a radiation clearance between the radiation source and the reference ground via a thickness of the substrate. The location of the shielding ground and the location of the driver circuit are aligned with each other to suppress a stray electromagnetic radiation generated by the driver circuit.

In one embodiment, the reference ground has a conductive groove extended from an edge of the reference ground to a mid-portion thereof, wherein the antenna further comprises a conductive module. The conductive module comprises a bridging conductive member and an extending conductive member. The bridging conductive member is extended from the feed point of the radiation source to the lower surface of the substrate. The extending conductive arm is retained at the conductive groove of the reference ground, wherein the extending conductive member has two ends electrically extended to the bridging conductive member and the driver circuit respectively.

In one embodiment, a projecting area of the radiation source on the substrate is formed parallel to and is located within a projecting area of the reference ground on the substrate.

In one embodiment, the projecting area of the driver circuit is located within the projecting area of the shielding ground.

In one embodiment, the driver circuit is encircled by the reference ground.

In one embodiment, the radiation source is electrically grounded.

In one embodiment, the radiation source is electrically connected to the reference ground, such that the radiation source is electrically grounded.

In one embodiment, the antenna further comprises a processing circuit which comprises at least one electronic component. Each of the electronic components comprises at least a terminal connector, wherein the reference ground comprises at least a soldering pad that the terminal connector is electrically connected to the soldering pad so as to electrically connect the electronic component to the driver circuit.

In one embodiment, the antenna further comprises a suppression fence which comprises a plurality of fencing bodies spaced apart from each other and aligned with each other, wherein the fencing bodies are lined up to extend from the shielding ground to the lower surface of the substrate so as to surround the driver circuit.

In one embodiment, the fencing bodies are spacedly lined up to extend from the reference ground to the upper surface of the substrate.

In one embodiment, at least one of the fencing bodies is electrically connected to the reference ground.

According to one embodiment, the length direction of the reference ground is aligned with the width direction of the substrate, wherein the reference ground is retained at the second end portion of the substrate. The length direction of the radiation source is aligned with the length direction of the substrate, wherein the radiation source is retained at the first end portion of the substrate. In addition, the central axis of the radiation source along the length direction thereof is offset the central axis of the substrate along the length direction thereof. Alternatively, the length direction of the shielding ground is aligned with the length direction of the substrate, wherein the shielding ground is retained at the second end portion of the substrate. The length direction of the radiation source is aligned with the width direction of the substrate, wherein the radiation source is retained at the first end portion of the substrate.

According to one embodiment, the length direction of the shielding ground is aligned with the width direction of the substrate, wherein the shielding ground is retained at the second end portion of the substrate. The length direction of the radiation source is aligned with the length direction of the substrate, wherein the radiation source is retained at the first end portion of the substrate. The length direction of the processing circuit is aligned with the length direction of the substrate, wherein the processing circuit is retained at the first end portion of the substrate. In addition, the radiation source is not coincided with the processing circuit in response to the thickness direction of the antenna. Alternatively, the length direction of the shielding ground is aligned with the width direction of the substrate, wherein the shielding ground is retained at the second end portion of the substrate. The length direction of the radiation source is aligned with the width direction of the substrate, wherein the radiation source is retained at the first end portion of the substrate. The length direction of the processing circuit is aligned with the width direction of the substrate, wherein the processing circuit is retained at the first end portion of the substrate. In addition, the radiation source is not coincided with the processing circuit in response to the thickness direction of the antenna.

In accordance with another aspect of the invention, the present invention comprises a manufacturing method of the antenna of the present invention, which comprises the following steps.
(a) Retain a first planar member and a second planar member at an upper surface of a substrate at a position that a first planar member and a second planar member are positioned adjacent to each other. Retain a third planar member at a lower surface of the substrate at a position corresponding to the second planar member at the upper surface of the substrate, wherein an opening groove of the third planar member is provided and extended from a receiving chamber of the third planar member to a mid-portion of the third planar member.
(b) Form a driver circuit at the lower surface of the substrate within a receiving chamber of the third planar member. Form an extending conductive member at the lower surface of the substrate at a position that the extending conductive member is extended along the opening groove of the third planar member and is extended from the driver circuit to the mid-portion of the third planar member.
(c) Form a bridging conductive member to extend through the substrate from the first planar member to the extending conductive member, wherein the first planar member forms a radiation source of the antenna, the second planar member forms the shielding ground of the antenna, and the third planar member forms a reference ground of the antenna. Furthermore, a radiation clearance is formed by the substrate between the first planar member and the second planar member to form the antenna of the present invention.

According to the preferred embodiment, the step (a) further comprises the following steps.
(a.1) Remove a portion of a metal layer which is coupled at the upper surface of the substrate to form the first planar member and the second planar member on the upper surface of the substrate.
(a.2) Remove a portion of another metal layer which is coupled at the lower surface of the substrate to form the third planar member on the lower surface of the substrate.

According to another embodiment, the step (a) further comprises the following steps.
(a.1') Couple the first planar member and the second planar member on the lower surface of the substrate.
(a.2') Couple the third planar member on the upper surface of the substrate.

According to the preferred embodiment, in the step (c), the bridging conductive member is extended through the substrate and is extended from the first planar member to the third planar member in order to electrically connect the radiation source to the reference ground.

According to the preferred embodiment, in the step (c), at least a soldering pad is formed by removing a close loop portion of the third planar member at the lower surface of the substrate, such that the soldering pad is spaced apart from the reference ground. At least one of a plurality of terminal connectors of at least one electronic component is electrically connected to a soldering pad, preferably by soldering, to form a processing circuit by an electronic component.

According to the preferred embodiment, in the step (b) or step (c), one set of fencing bodies are lined up and extended from a periphery of the second planar member to surround the driver circuit at the lower surface of the substrate.

In accordance with another aspect of the invention, the present invention comprises an anti-interfering method for the antenna for suppressing the stray electromagnetic wave radiation generated by the driving circuit of the antenna, wherein the anti-interfering method comprises the following steps.
(A) According to a thickness direction of the antenna, retain the radiation source and the reference ground at the upper surface and the lower surface of the substrate respectively corresponding to a first end portion of the substrate.
(B) According to the thickness direction of the antenna, retain the shielding ground and the driver circuit at the upper surface and the lower surface of the substrate respectively corresponding to a second end portion of the substrate, wherein when the driver circuit provides a microwave excitation electrical signal to the radiation source through a feed point thereof for enabling the antenna to generate the radiation wave, the shielding ground is able to effectively suppress the stray electromagnetic radiation generated by the driver circuit.

According to the preferred embodiment, in the above method, a projecting area of the driver circuit on the substrate is formed parallel to and is located within a projecting area of the shielding ground on the substrate.

According to the preferred embodiment, in the above method, the processing circuit, which is electrically connected to the driver circuit, is retained at one side of the reference ground, wherein the processing circuit and the radiation source are separated by the reference ground in response to a thickness direction of the antenna.

According to the preferred embodiment, in the above method, one set of fencing bodies is formed to extend from the shielding ground to the lower surface of the substrate so as to surround the driver circuit.

According to the preferred embodiment, in the above method, at least one of the fencing bodies is electrically connected to the reference ground.

According to the preferred embodiment, in the above method, the driver circuit is covered by the shielding cover.

According to the preferred embodiment, in the above method, the reference ground is covered by the shielding cover.

### BRIEF DESCRIPTION OF THE DRAWINGS

Fig. 1A is a top view of a conventional antenna with a double-layer structure.
Fig. 1B is a side view of a conventional antenna with the double-layer structure.
Fig. 1C is an exploded perspective view of the conventional antenna with the double-layer structure.
Fig. 2A is a top view of a conventional antenna with a laminated structure.
Fig. 2B is a side view of the conventional antenna with the laminated structure.
Fig. 2C is an exploded perspective view of the conventional antenna with the laminated structure.
Fig. 3 is a perspective view of an antenna according to a first preferred embodiment of the present invention.
Fig. 4 is a top view of the antenna according to the above first preferred embodiment of the present invention.
Fig. 5 is an exploded perspective view of the antenna according to the above first preferred embodiment of the present invention.
Fig. 6A is a top perspective view of the antenna according to the above first preferred embodiment of the present invention, wherein the shielding cover is not shown in this figure.
Fig. 6B is a bottom perspective view of the antenna according to the above first preferred embodiment of the present invention, wherein the shielding cover is not shown in this figure.
Fig. 7 is a sectional view of the antenna according to the above first preferred embodiment of the present invention, wherein the shielding cover is not shown in this figure.
Fig. 8A illustrates a first step of a manufacturing method of the antenna according to the above first preferred embodiment of the present invention.
Fig. 8B illustrates a second step of the manufacturing method of the antenna according to the above first preferred embodiment of the present invention.
Fig. 8C illustrates a third step of the manufacturing method of the antenna according to the above first preferred embodiment of the present invention.
Fig. 8D illustrates a fourth step of the manufacturing method of the antenna according to the above first preferred embodiment of the present invention.
Fig. 8E illustrates a fifth step of the manufacturing method of the antenna according to the above first preferred embodiment of the present invention.
Fig. 9 illustrates a first alternative mode of the antenna according to the above first preferred embodiment of the present invention.
Fig. 10 illustrates a second alternative mode of the antenna according to the above first preferred embodiment of the present invention.
Fig. 11 illustrates a third alternative mode of the antenna according to the above first preferred embodiment of the present invention.
Fig. 12 illustrates a fourth alternative mode of the antenna according to the above first preferred embodiment of the present invention.
Fig. 13 is a bottom perspective view of the antenna according to the fourth alternative mode of the above first preferred embodiment of the present invention, wherein the shielding cover is not shown in this figure.
Fig. 14 is a sectional view of the antenna according to the fourth alternative mode of the above first preferred embodiment of the present invention, wherein the shielding cover is not shown in this figure.
Fig. 15 illustrates a fifth alternative mode of the antenna according to the above first preferred embodiment of the present invention.
Fig. 16 illustrates a sixth alternative mode of the antenna according to the above first preferred embodiment of the present invention.
Fig. 17 illustrates a seventh alternative mode of the antenna according to the above first preferred embodiment of the present invention.
Fig. 18 illustrates an eighth alternative mode of the antenna according to the above first preferred embodiment of the present invention, wherein the shielding cover is not shown in this figure.
Fig. 19 is a perspective view of an antenna according to a second preferred embodiment of the present invention.
Fig. 20 is a top view of the antenna according to the above second preferred embodiment of the present invention.
Fig. 21 is an exploded perspective view of the antenna according to the above second preferred embodiment of the present invention.
Fig. 22A is a top perspective view of the antenna according to the above second preferred embodiment of the present invention, wherein the shielding cover is not shown in this figure.
Fig. 22B is a bottom perspective view of the antenna according to the above second preferred embodiment of the present invention, wherein the shielding cover is not shown in this figure.
Fig. 23 is a sectional view of the antenna according to the above second preferred embodiment of the present invention, wherein the shielding cover is not shown in this figure.
Fig. 24 illustrates a first alternative mode of the antenna according to the above second preferred embodiment of the present invention.
Fig. 25 illustrates a second alternative mode of the antenna according to the above second preferred embodiment of the present invention.
Fig. 26 illustrates a third alternative mode of the antenna according to the above second preferred embodiment of the present invention.
Fig. 27 illustrates a fourth alternative mode of the antenna according to the above second preferred embodiment of the present invention.
Fig. 28 is a top perspective view of the antenna according to the fourth alternative mode of the above second preferred embodiment of the present invention, wherein the shielding cover is not shown in this figure.
Fig. 29 is a bottom perspective view of the antenna according to the fourth alternative mode of the above second preferred embodiment of the present invention, wherein the shielding cover is not shown in this figure.
Fig. 30 is a sectional view of the antenna according to the fourth alternative mode of the above second preferred embodiment of the present invention, wherein the shielding cover is not shown in this figure.
Fig. 31 is a top view of the antenna illustrating a modification of the fourth alternative mode of the above second preferred embodiment of the present invention.
Fig. 32 is a top perspective view of the modified antenna of the fourth alternative mode of the above second preferred embodiment of the present invention, wherein the shielding cover is not shown in this figure.
Fig. 33 is a bottom perspective view of the modified antenna of the fourth alternative mode of the above second preferred embodiment of the present invention, wherein the shielding cover is not shown in this figure.
Fig. 34 is a sectional view of the modified antenna of the fourth alternative mode of the above second preferred embodiment of the present invention, wherein the shielding cover is not shown in this figure.
Fig. 35 illustrates a fifth alternative mode of the antenna according to the above second preferred embodiment of the present invention.
Fig. 36 is a bottom perspective view of the antenna according to the fifth alternative mode of the above second preferred embodiment of the present invention, wherein the shielding cover is not shown in this figure.
Fig. 37 is a sectional view of the antenna according to the fifth alternative mode of the above second preferred embodiment of the present invention, wherein the shielding cover is not shown in this figure.
Fig. 38 illustrates a sixth alternative mode of the antenna according to the above second preferred embodiment of the present invention.
Fig. 39 is a top perspective view of the antenna according to the sixth alternative mode of the above second preferred embodiment of the present invention, wherein the shielding cover is not shown in this figure.
Fig. 40 is a bottom perspective view of the antenna according to the sixth alternative mode of the above second preferred embodiment of the present invention, wherein the shielding cover is not shown in this figure.
Fig. 41 is a sectional view of the antenna according to the sixth alternative mode of the above second preferred embodiment of the present invention, wherein the shielding cover is not shown in this figure.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention.

It is appreciated that the terms "longitudinal", "transverse", "upper", "lower", "front", "rear", "left", "right", vertical", "horizontal", "top", "bottom", "exterior", and "interior" in the following description refer to the orientation or positioning relationship in the accompanying drawings for easy understanding of the present invention without limiting the actual location or orientation of the present invention. Therefore, the above terms should not be an actual location limitation of the elements of the present invention.

It is appreciated that the terms "one", "a", and "an" in the following description refer to "at least one" or "one or more" in the embodiment. In particular, the term "a" in one embodiment may refer to "one" while in another embodiment may refer to "more than one". Therefore, the above terms should not be an actual numerical limitation of the elements of the present invention.

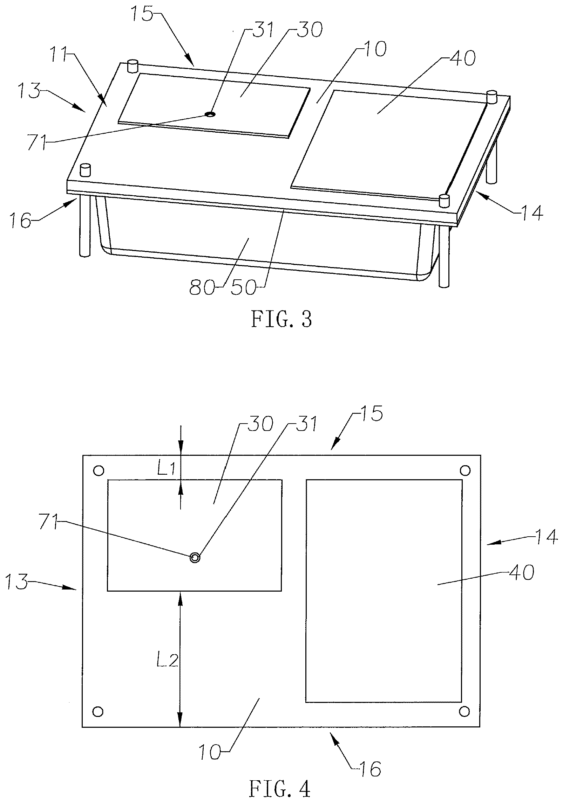

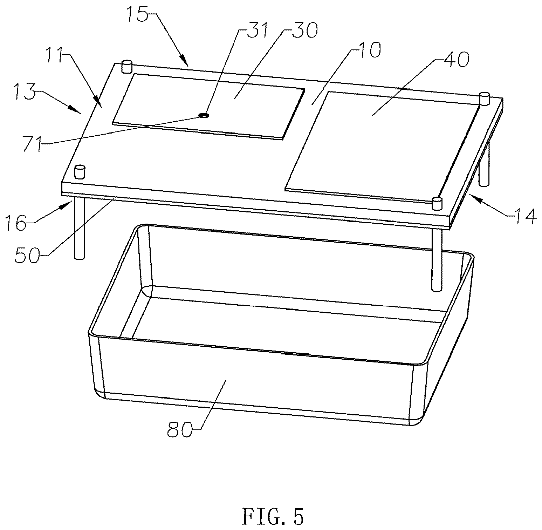

Referring to Figs. 3 to 7, an antenna according to a first preferred embodiment of the present invention is illustrated, wherein the antenna comprises a substrate 10 inherently forming a radiation clearance 20, a radiation source 30, a shielding ground 40, a reference ground 50, and a driver circuit 60.

Particularly, the substrate 10 has an upper surface 11 and a corresponding lower surface 12, wherein the radiation source 30 and the shielding ground 40 are positioned adjacent to each other and are retained at the upper surface 11 of the substrate 10. Correspondingly, the reference ground 50 and the driver circuit 60 are positioned adjacent to each other and are retained at the lower surface 12 of the substrate 10. The radiation source 30 has a feed point 31 electrically connected to the driver circuit 60, so as to allow the driver circuit 60 providing a microwave excitation electrical signal to the radiation source 30 through the feed point 31 of the radiation source 30.

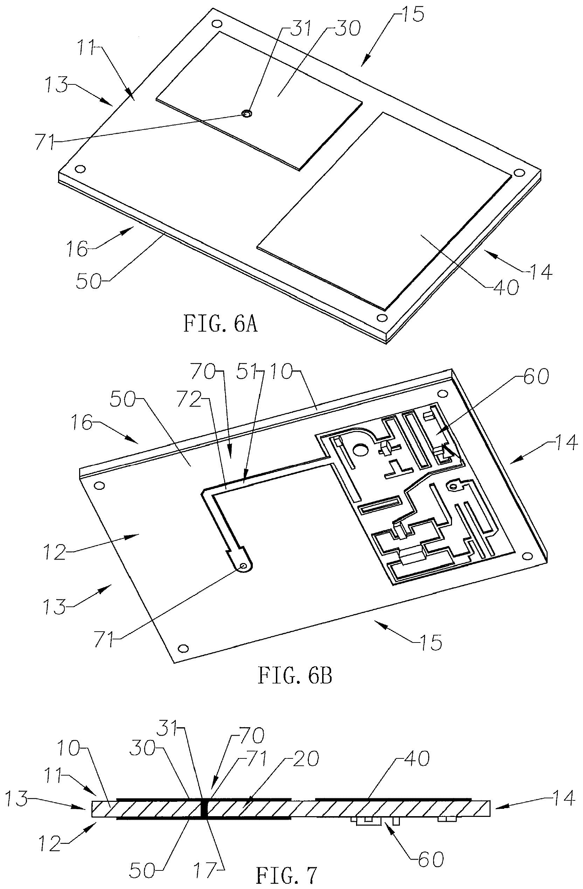

As shown in Fig. 7, the radiation source 30 and the reference ground 50 are aligned and located at two opposed surfaces of the substrate 10 according to a vertical direction of antenna, i.e. a thickness direction thereof, such that the substrate 10 forms the radiation clearance 20 between the radiation source 30 and the reference ground 50. Furthermore, when the driver circuit 60 provides the microwave excitation electrical signal to the radiation source 30 through the feed point 31 thereof, the radiation source 30 and the reference ground 50 cooperates with each other to allow the antenna generating radiation waves.

As shown in Fig. 7, the shielding ground 40 and the driver circuit 60 cooperate with each other according to the thickness direction of the antenna, wherein the shielding ground 40 is configured to suppress a stray electromagnetic wave radiation when the driver circuit 60 generates the microwave excitation electric signal, so as to reduce the interference during the operation of the antenna.

Preferably, a projecting area of the radiation source 30 on the substrate 10 is formed parallel to and is located within a projecting area of the reference ground 50 on the substrate 10, in such a manner that a detection area of the antenna will be increased.

Preferably, a projecting area of the driver circuit 60 on the substrate 10 is formed parallel to and is located within a projecting area of the shielding ground 40 on the substrate 10, in such a manner that the shielding ground 40 can effectively suppress the stray electromagnetic wave radiation when the driver circuit 60 generates the microwave excitation electric signal, so as to reduce the interference during the operation of the antenna.

Furthermore, as shown in Fig. 6B, the driver circuit 60 is encircled by the reference ground 50 that the reference ground 50 surrounds four peripheral sides of the driver circuit 60 to further increase the area of the reference ground 50 so as to further increase the detection area of the antenna. Alternatively, in other embodiments, the reference ground 50 surrounds two or three four peripheral sides of the driver circuit 60.

It is worth mentioning that, in the first embodiment as shown in Figs. 3 to 7, the substrate 10 of the antenna is provided to enable the radiation source 30 coupling at the upper surface 11 of the substrate 10 and the reference ground 50 coupling at the lower surface 12 of the substrate 10. Therefore, a thickness of the antenna can be minimized to form a compact and ultra-thin antenna structure. At the same time, the material of the antenna can be substantially reduced and the manufacturing process of the antenna can be further simplified so as to reduce the manufacturing cost of the antenna of the present invention.

As shown in Figs. 3 to 7, the substrate 10 has a rectangular shape according to the first embodiment of the present invention, wherein substrate 10 defines a longitudinal direction along a length direction and a transverse direction along a width direction. The substrate 10 further has two end portions along the length direction and two side portions along the width direction. Particularly, the two end portions of the substrate 10 are a first end portion 13 and a second end portion 14. The two side portions of the substrate 10 are a first side portion 15 and a second side portion 16. In other words, the first end portion 13 and the second end portion 14 are formed at two opposed edge portions of the substrate 10 along the length direction thereof. The first side portion 15 and the second side portion 16 are formed at two opposed edge portions of the substrate 10 along the width direction thereof. The radiation source 30 and the reference ground 50 are correspondingly retained at the substrate 10 at the first end portion 13 thereof. Correspondingly, the shielding ground 40 and the driver circuit 60 are correspondingly retained at the substrate 10 at the second end portion 14 thereof.

It is worth mentioning that the first end portion 13 and the second end portion 14 are configured to define two different areas on the substrate 10 but not to limit any structure or configuration of the substrate 10. Likewise, the first side portion 15 and the second side portion 16 are configured to define two different areas on the substrate 10 but not to limit any structure or configuration of the substrate 10.

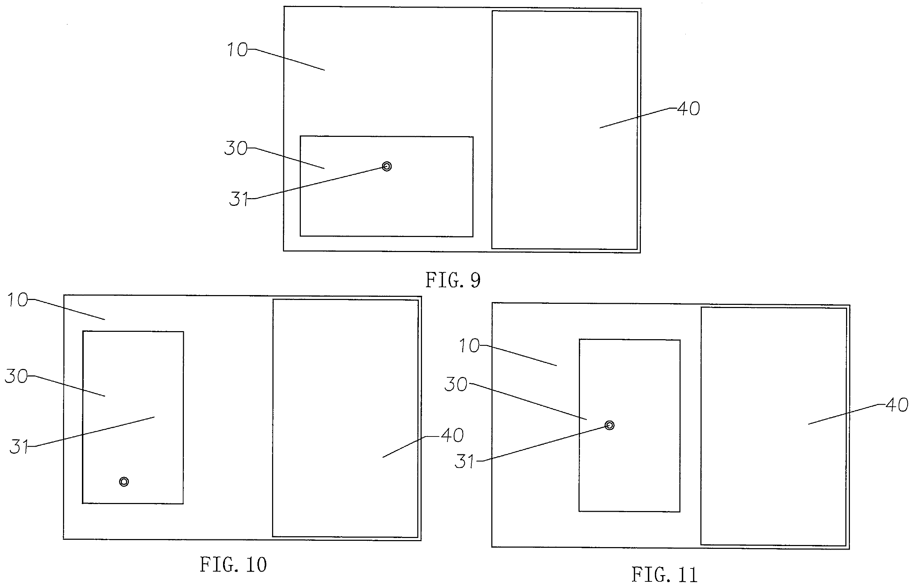

Preferably, as shown in Figs. 3 to 7 of the first embodiment, the length direction of the shielding ground 40 is extended aligning with the width direction of the substrate 10. A polarization direction of the radiation source 30 is aligned with the width direction of the substrate 10, wherein the radiation source 30, which is parallel to a central axis of the substrate 10 along the length direction (a straight line passing through a physical midpoint of the radiation source 30), is offset from the central axis of the substrate 10 along the length direction (a straight line passing through a physical midpoint of the substrate 10 and aligning with the length direction thereof). In other words, the radiation source 30 has a rectangular shape that the central axis of the radiation source 30 along the length direction thereof (a straight line passing through a physical midpoint of the radiation source 30 and aligning with the length direction thereof) is offset from the central axis of the substrate 10 along the length direction (the straight line passing through the physical midpoint of the substrate 10 and aligning with the length direction thereof). Therefore, the radiation source 30 is retained at a position near an edge of the substrate 10 and located at the first end portion 13 of the substrate 10. In this embodiment, as an example as shown in Figs. 3 to 7, the radiation source 30 is located at the first end portion 13 of the substrate 10 and adjacent to the first side portion 15 thereof. Alternatively, as shown in Fig. 9, the radiation source 30 is located at the first end portion 13 of the substrate 10 and adjacent to the second side portion 16 thereof.

Particularly, as shown in Fig. 4, a distance between the edge of the radiation source 30 and the edge of the first side portion 15 of the substrate 10 is set as parameter L1. A distance between the edge of the radiation source 30 and the edge of the second side portion 16 of the substrate 10 is set as parameter L2. In other words, the parameter L2 is the distance between the edge of the radiation source 30 and the edge of the substrate 10 along a polarization direction of the radiation source 30, wherein the parameter L2 ranges from L2 ≥ 1/16 λ, where λ is the wavelength of the radiation wave of the antenna. Therefore, the radiation source 30 can be excited at its polarization direction to generate the radiation wave, wherein the range of the parameter L1 is preferably 0 ≤ L1 ≤ 1/4 λ to minimize the size of the antenna of the present invention.

Fig. 10 illustrates a second alternative mode of the antenna according to the first preferred embodiment of the present invention, wherein the structural differences between the second alternative mode in Fig. 10 and the first embodiment in Figs. 3 to 7 are that the length direction of the radiation source 30 is aligned with the width direction of the substrate 10 and the radiation source 30 is located away from the shielding ground 40. Furthermore, as shown in Fig. 10, the length direction of the radiation source 30 and the length direction of the shielding ground 40 are aligned with the width direction of the substrate 10, while the radiation source 30 is located away from the shielding ground 40.

Fig. 11 illustrates a third alternative mode of the antenna according to the first preferred embodiment of the present invention, wherein the structural differences between the second alternative mode in Fig. 11 and the first embodiment in Figs. 3 to 7 are that the length direction of the radiation source 30 is aligned with the width direction of the substrate 10 and the radiation source 30 is located close to the shielding ground 40. Furthermore, as shown in Fig. 11, the length direction of the radiation source 30 and the length direction of the shielding ground 40 are aligned with the width direction of the substrate 10, while the radiation source 30 is located close to the shielding ground 40.

As shown in Figs. 3 to 7, the substrate 10 further has a conductive slot 17 which is a through slot extended between the upper surface 11 of the substrate 10 and the lower surface 12 thereof. The reference ground 50 has a conductive groove 51 formed at the lower surface 12 of the substrate 10 and extended from an edge of the reference ground 50 to a mid-portion of the reference ground 50, wherein the conductive slot 17 of the substrate 10 is communicated with the conductive groove 51 of the reference ground 50. The antenna further comprises a conductive module 70 which comprises a bridging conductive member 71 and an extending conductive member 72. The bridging conductive member 71 is extended at the conductive slot 17 and is extended from the feed point 31 of the radiation source 30 to the lower surface 12 of the substrate 10, that is bridging between the feed point 31 of the radiation source 30 and the lower surface 12 of the substrate 10. The extending conductive member 72 is extended at the conductive groove 51, wherein the extending conductive member 72 has two ends electrically extended to the bridging conductive member 71 at the lower surface 12 of the substrate 10 and the driver circuit 60 respectively, such that the driver circuit 60 is electrically connected to the feed point 31 of the radiation source 30 via the bridging conductive member 71 and the extending conductive member 72. Therefore, the driver circuit 60 is able to provide the microwave excitation electrical signal to the radiation source 30 through the feed point 31 thereof along the path of the extending conductive member 72 and the bridging conductive member 71 orderly. Preferably, the conductive groove 51 of the reference ground 50 has a width less than or equal to 1/64 λ.

As shown in Figs. 3 to 7, the substrate 10 further comprises a shielding cover 80 coupled at the lower surface 12 of the substrate 10, wherein the driver circuit 60 is enclosed by the shielding cover 80, such that the shielding cover 80 is configured to suppress the stray electromagnetic waves generated by the driver circuit 60. Preferably, the shielding cover 80 is arranged to further enclose at least a portion of the reference ground 50 to configure the shielding cover 80 at the lower surface 12 of the substrate 10 in a convenient manner. In one embodiment, the shielding cover 80 is soldered at the lower surface 12 of the substrate 10 in such a manner that the shielding cover 80 is able to cover the reference 50 after the shielding cover 80 is soldered at the lower surface 12 of the substrate 10.

It is appreciated that, comparing to the first alternative mode of the antenna in Fig. 9 and the second alternative mode of the antenna in Fig. 10, the radiation source 30 of the third alternative mode of the antenna as shown in Fig. 11 is positioned adjacent to the shielding ground 40. Correspondingly, the feed point 31 of the radiation source 30 is set away from the shielding ground 40 at the width direction of the radiation source 30, wherein the radiation source 30 and the reference ground 50 cooperate with each other to generate the electromagnetic waves under the excitation of the driver circuit 60. Particularly, the radiation source 30 and the shielding ground 40 are disposed adjacent to each other, such that, the radiation source 30 is able to suppress the stray electromagnetic radiation from the extending conductive member 72.

In other embodiments, the extending conductive member 72 is configured in a jumping structure to electrically connect between the bridging conductive member 71 and the driver circuit 60 for omitting the conductive groove 51 so as to maintain the integrity of the reference ground 50. Accordingly, the integrity of the reference ground 50 is able to suppress the stray electromagnetic radiation from the extending conductive member 72 with the jumping structure. The structure and manufacturing process of the extending conductive member 72 with the jumping structure can be varied. For example, but not limited to, the extending conductive member 72 can be a circular conductor, a flat conductor, a wire with an insulated sleeve, a wire without an insulated sleeve, a coaxial shielded cable, and etc.

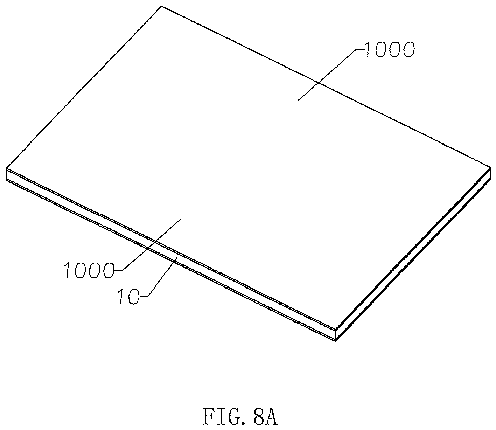

Figs. 8A to 8E illustrate the manufacturing process of the antenna of the present invention.

In Fig. 8A, a metal layer 1000 is coupled at each of the upper surface 11 and the lower surface 12 of the substrate 10. It is worth mentioning that the material of the metal layer 100 coupled at each of the upper surface 11 and the lower surface 12 of the substrate 10 should not be limited. For example, the metal layer 1000 can be a copper plate, such that, as an example, the copper plate is coupled at each of the upper surface 11 and the lower surface 12 of the substrate 10. It is worth mentioning that the attachment method of the metal layer 1000 coupled at the upper surface 11 of the substrate 10 can be different from the attachment method of the metal layer 1000 coupled at the lower surface 12 of the substrate 10. For example, the metal layer 1000 is coupled at the upper surface 11 of the substrate 10 by adhesive or press bonding, and the metal layer 1000 is coupled at the lower surface 12 of the substrate 10 by press bonding.

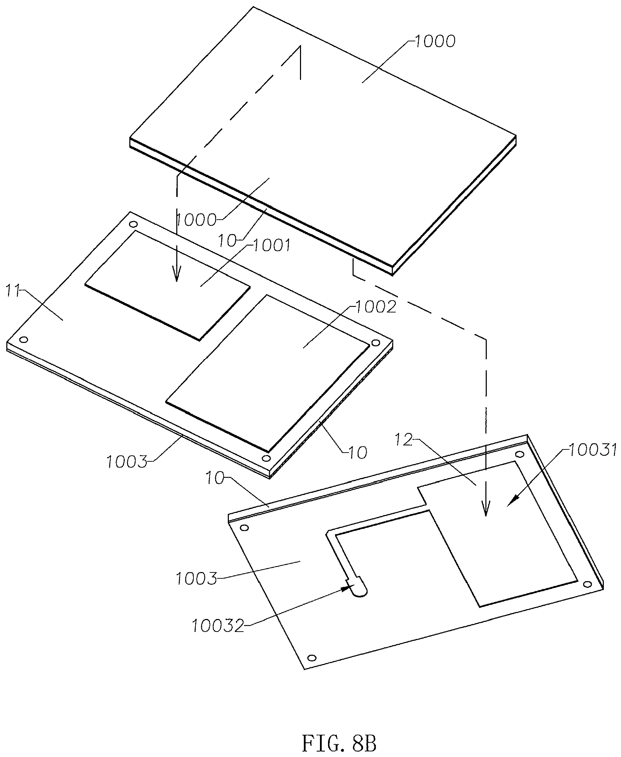

In the stage as illustrated in Fig. 8B, the metal layer 1000 is coupled at the upper surface 11 of the substrate 10 via etching process to define a first planar member 1001 and a second planar member 1002 located adjacent to each other. The metal layer 1000 is coupled at the lower surface 12 of the substrate 10 via etching process to define a third planar member 1003 having a receiving chamber 10031 and an opening groove 10032, i.e. the conductive groove 51, extended from the receiving chamber 10031 to a mid-portion of the third planar member 1003 on the lower surface 12 of the substrate 10.

It is worth mentioning that the order of etching the metal layers 1000 to the upper surface 11 and the lower surface 12 of the substrate 10 should not be limited according to the manufacturing process of the antenna of the present invention.

It is worth mentioning that the receiving chamber 10031 of the third planar member 1003 is a closed chamber as shown in Fig. 8B. However, it should be appreciated that the receiving chamber 10031 of the third planar member 1003 is an opened chamber. For example, two peripheral sides or three peripheral sides of the receiving chamber 10031 are surrounded by the third planar member 1003 to form the opened chamber.

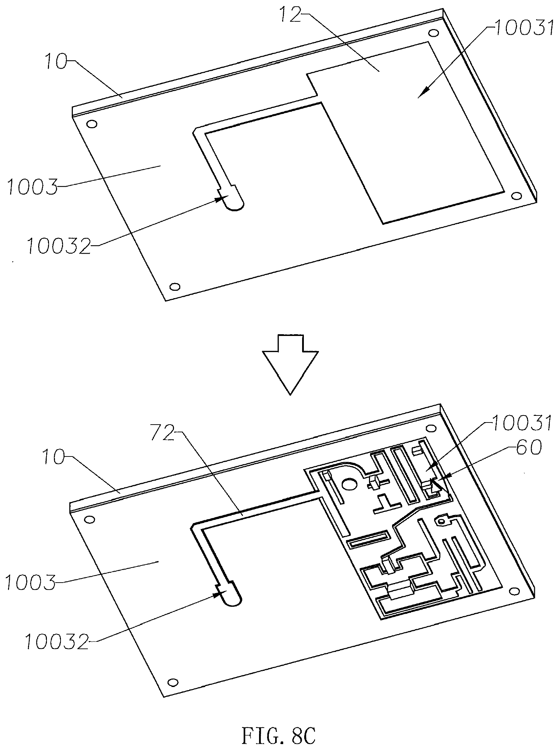

In Fig. 8C, the extending conductive member 72 is electrically extended to the driver circuit 60, wherein the extending conductive member 72 and the driver circuit 60 are formed at the lower surface 12 of the substrate 10. Accordingly, the driver circuit 60 is retained in the receiving chamber 10031 of the third planar member 1003, wherein the extending conductive member 72 is extended along the opening groove 10032 of the third planar member 1003, such that the extending conductive member 72 is extended from the driver circuit 60 to the mid-portion of the third planar member 1003. According to the preferred embodiment, after the driver circuit 60 is formed, four peripheral sides of driver circuit 60 are surrounded by the third board 1003 so as to increase an area of the third board 1003.

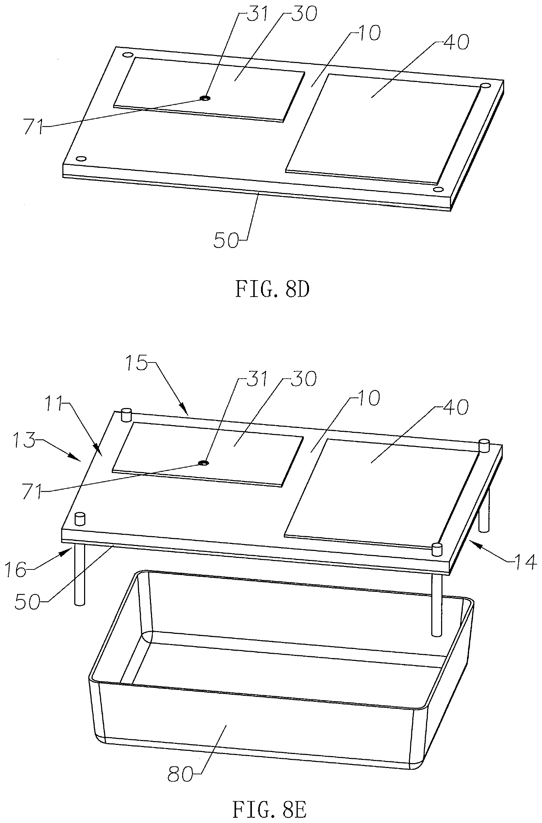

In the stage as illustrated in Fig. 8D, the conductive slot 17 is formed at the substrate 10 via a metallization slot process, wherein the conductive slot 17 is extended from the first planar member 1001 to the bridging conductive member 71 through the extending conductive member 72. Accordingly, the first planar member 1001 forms the radiation source 30, wherein the conductive end of the bridging conductive member 71 at the first planar member 1001 forms the feed point 31 of the radiation source 30. The second planar member 1002 forms the shielding ground 40 while the third planar member 1003 forms the reference ground 50, wherein the substrate 10, i.e. the thickness thereof, forms the radiation clearance 20 between the radiation source 30 and the reference ground 50.

It is worth mentioning that the first planar member 1001, the second planar member 1002 and the third planar member 1003 are preferably three copper plates coupled at the substrate 10 by copper-clad lamination, such that the first planar member 1001, the second planar member 1002 and the third planar member 1003 will form the radiation source 30, the shielding ground 40 and the reference ground 50 respectively. Accordingly, the radiation source 30 and the reference ground 50 cooperate with each other to allow the antenna generating the radiation waves. The driver circuit 60 and the shield ground 40 cooperate with each other to allow the driver circuit 60 operates normally and to allow the shielding ground 40 suppressing the stray electromagnetic radiation generated by the driver circuit 60.

Furthermore, the conductive slot 17 is formed at the substrate 10 via the metallization slot process, wherein the method of extending the conductive slot 17 from the first planar member 1001 to the bridging conductive member 71 through the extending conductive member 72 comprises the following steps.

Firstly, drill an opening that connects the first planar member 1001, the substrate 10 and the extending conductive member 72, wherein a portion of the opening at the substrate 10 forms the conductive slot 17. It is worth mentioning that the opening can be a through hole penetrating through the first planar member 1001, the substrate 10 and the extending conductive member 72. Alternatively, the opening can be blind hole that the opening extends through the first planar member 1001 and the substrate 10 toward the extending conductive member 72. Alternatively, the opening can be blind hole that the opening extends through the extending conductive member 72 and the substrate 10 toward the first planar member 1001. In other words, the blind hole is formed depending on the drilling direction of the opening. It is worth mentioning that the drilling method can be, but not limited to, digitally control drilling, mechanical punching, plasma etching, laser drilling and chemical etching, and etc..

Secondly, remove any drilling residuals at the opening during the drilling operation. For example, both dry decontamination and wet decontamination can be used to remove the drilling residuals during the drilling operation of the opening depending on the drilling process and the material of the substrate 10.

Thirdly, form a conductive layer at the opening of the substrate 10 via an electroless copper plating process to form the bridging conductive member 71 extending from the first planar member 1001 to the extending conductive member 72, that is bridging between the first planar member 1001 and the extending conductive member 72, at the conductive slot 17.

In the stage as illustrated in Fig. 8E, the shielding cover 80 is mounted at the lower surface 12 of the substrate 10, such that the driver circuit 60 and the reference ground 50 are covered by the shielding cover 80 to form the antenna of the present invention.

Alternatively, according to another manufacturing method of the antenna of the present invention, after the substrate 10 is provided and the driver circuit 60 and the extending conductive member 72 are formed, the first planar member 1001 and the second planar member 1002 are coupled at the upper surface 11 of the substrate 10 while the third planar member 1003 is coupled at the lower surface 12 of the substrate 10. Then, the conductive slot 17 is formed at the substrate 10 via the metallization slot process and the bridging conductive member 71 is formed at the conductive slot 17 and extending from the first planar member 1001 to the extending conductive member 72, that is bridging between the first planar member 1001 and the extending conductive member 72.

Alternatively, in another manufacturing method of the antenna of the present invention, after the substrate 10 is provided, the first planar member 1001 and the second planar member 1002 are coupled at the upper surface 11 of the substrate 10 while the third planar member 1003 is coupled at the lower surface 12 of the substrate 10. Then, the driver circuit 60 and the extending conductive member 72 are formed at the lower surface 12 of the substrate 10 that the extending conductive member 72 is electrically extended from the driver circuit 60. Accordingly, the driver circuit 60 is retained at the receiving chamber 10031 of the third planar member 1003, wherein the extending conductive member 72 is retained at the opening groove 10032 of the third planar member 1003, such that the extending conductive member 72 is extended from the driver circuit 60 to the mid-portion of the third planar member 1003. Then, the conductive slot 17 is formed at the substrate 10 via the metallization slot process and the bridging conductive member 71 is formed at the conductive slot 17 and extended from the first planar member 1001 to the extending conductive member 72, that is bridging between the first planar member 1001 and the extending conductive member 72.

According to another embodiment, the manufacturing method of the antenna of the present invention comprises the following steps.
(a) Retain the first planar member 1001 and the second planar member 1002 at the upper surface 11 of the substrate 10 at a position that the first planar member 1001 and the second planar member 1002 are positioned adjacent to each other. Retain the third planar member 1003 at the lower surface 12 of the substrate 10 at a position corresponding to the second planar member 1002 at the upper surface 11 of the substrate 10, wherein the opening groove 10032 of the third planar member 1003 is extended from the receiving chamber 10031 of the third planar member 1003 to the mid-portion thereof on the lower surface 12 of the substrate 10.
(b) Form the driver circuit 60 at the lower surface 12 of the substrate 10 within the receiving chamber 10031 of the third planar member 1003. Form the extending conductive member 72 at the lower surface 12 of the substrate 10 at a position that the extending conductive member 72 is extended along the opening groove 10032 of the third planar member 1003 and is extended from the driver circuit 60 to the mid-portion of the third planar member 1003.
(c) Form the bridging conductive member 71 to extend through the substrate 10 from the first planar member 1001 to the extending conductive member 72, wherein the first planar member 1001 forms the radiation source 30 of the antenna, the second planar member 1002 forms shielding ground 40 of the antenna, and the third planar member 1003 forms the reference ground 50 of the antenna. Furthermore, the radiation clearance 20 is formed by the substrate 10 between the first planar member 1001 and the second planar member 1003 to form the antenna of the present invention.

According to one preferred embodiment of the present invention, the step (a) further comprises the following steps.
(a.1) Remove a portion of the metal layer 1000 which is coupled at the upper surface 11 of the substrate 10 to form the first planar member 1001 and the second planar member 1002 on the upper surface 11 of the substrate 10.
(a.2) Remove a portion of another metal layer 1000 which is coupled at the lower surface 12 of the substrate 10 to form the third planar member 1003 on the lower surface 12 of the substrate 10.

According to another embodiment, the step (a) further comprises the following steps.
(a.1') Couple the first planar member 1001 and the second planar member 1002 on the lower surface 12 of the substrate 10.
(a.2') Couple the third planar member 1003 on the upper surface 11 of the substrate 10.

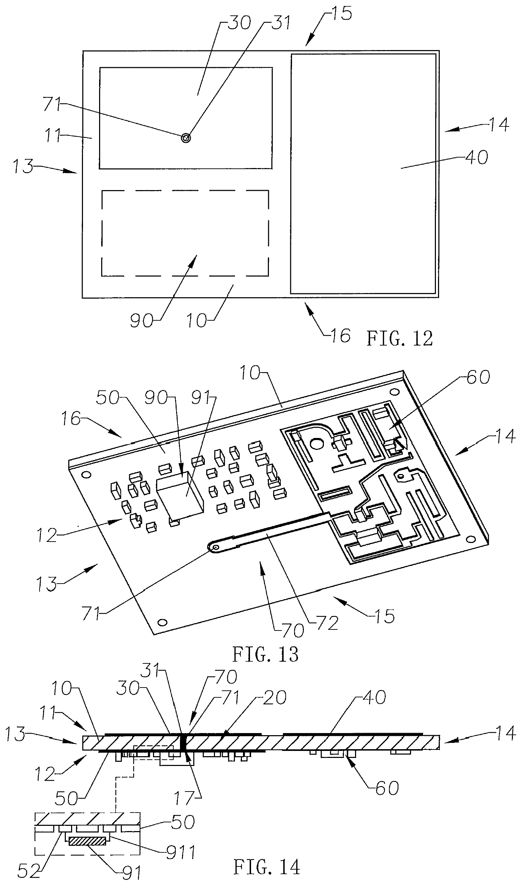

Figs. 12 to 14 illustrate a fourth alternative mode as a modification of the above first embodiment, wherein, comparing to the antenna as shown in Figs. 3 to 7, the antenna as shown in Figs. 12 to 14 further comprises a processing circuit 90 formed on the lower surface 12 of the substrate 10 and electrically connected to the driver circuit 60 for processing the electrical signal of the driver circuit 60. For example, the processing circuit 90 is configured to amplify the detection signal of the driver circuit 60.

The processing circuit 90 comprises one or more electronic components 91 wherein each of the electronic components 91 comprises at least a terminal connector 911, preferably two or more terminal connectors 911. The reference ground 50 comprises at least one soldering pad 52 formed by removing a close loop portion of the reference ground 50, such that the soldering pad 52 is spaced apart from the reference ground 50. At least one of the terminal connectors 911 is connected to the soldering pad 52, preferably by soldering, to retain the electronic component 91 on the substrate 10. The processing circuit 90 is able to electrically connect the circuit of the substrate 10 via the soldering pad 52 of the reference ground 50 and to electrically connect to the driver circuit 60 via the circuit of the substrate 10. Preferably, the distance between the reference ground 50 and the soldering pad 52 is less than or equal to 1/64 λ.

As shown in Fig. 14, the radiation source 30 and the processing circuit 90 are respectively retained at two different sides of the reference ground 50 along the thickness direction of the antenna.

As shown in Fig. 12, the projection area of the processing circuit 90 is located within the projection area of the reference ground 50. Furthermore, the projection area of the processing circuit 90 and the projection area of the radiation source 30 are respectively located at different regions of the projection area of the reference ground 50.

For example, as shown in Fig. 12, the length of the shielding ground 40 is matched with the width of the substrate 10. The length direction of the radiation source 30 is aligned with the length direction of the substrate 10, wherein the radiation source 30 is positioned close to the first side portion 15 of the substrate 10. The length direction of the processing circuit 90 is aligned with the length direction of the substrate 10, and the processing circuit 90 is positioned close to the second side portion 16 of the substrate 10.

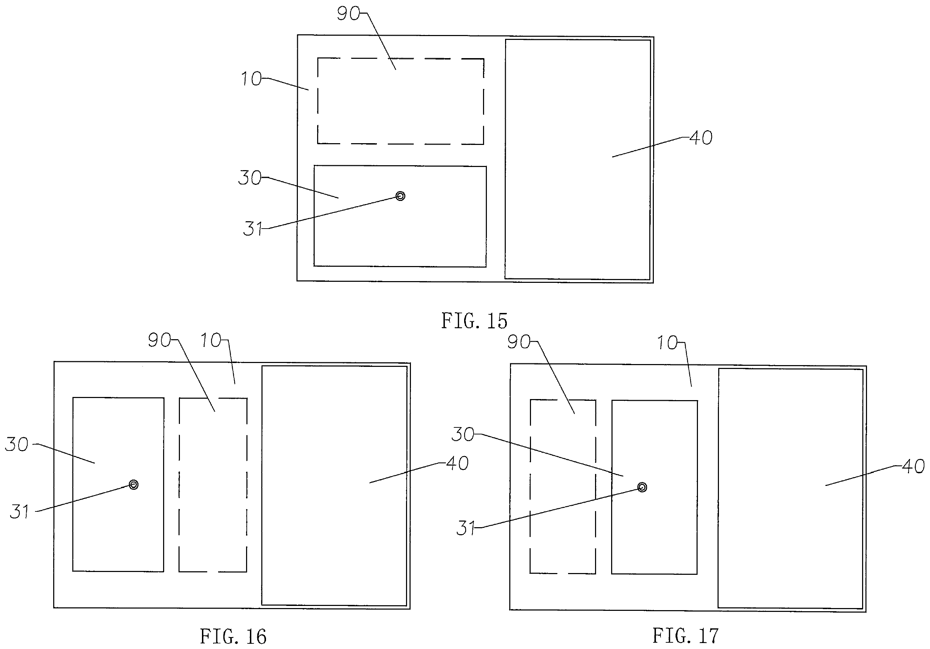

Fig. 15 illustrates a fifth alternative mode of the above first embodiment, wherein the length direction of the shielding ground 40 is aligned with the width direction of the substrate 10. The length direction of the radiation source 30 is aligned with the length direction of the substrate 10, wherein the radiation source 30 is positioned close to the second side portion 16 of the substrate 10. The length direction of the processing circuit 90 is aligned with the length direction of the substrate 10, wherein the processing circuit 90 is positioned close to the first side portion 15 of the substrate 10.

Fig. 16 illustrates a sixth alternative mode of the first embodiment, wherein the length direction of the shielding ground 40, the length direction of the radiation source 30, and the length direction of the processing circuit 90 are aligned with the width direction of the substrate 10, wherein the radiation source 30 is positioned away from the shielding ground 40, and the processing circuit 90 is positioned adjacent to the shielding ground 40.

Fig. 17 illustrates a seventh alternative mode of the above first embodiment, wherein the length direction of the shielding ground 40, the length direction of the radiation source 30, and the length direction of the processing circuit 90 are aligned with the width direction of the substrate 10, wherein the radiation source 30 is positioned adjacent to the shielding ground 40, and the processing circuit 90 is positioned away from the shielding ground 40.

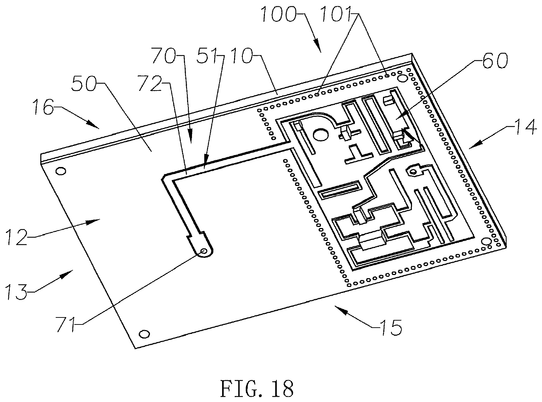

Fig. 18 illustrates an eighth alternative mode as another modification of the above first embodiment, wherein, comparing to the antenna as shown in Figs. 3 to 7, the antenna as illustrated in Fig. 16 further comprises a suppression fence 100. The driver circuit 60 is encircled within the suppression fence 100 to suppress the stray electromagnetic radiation generated by the driver circuit 60.

Accordingly, the suppression fence 100 comprises a plurality of fencing bodies 101 spaced apart from each other and aligned with each other, wherein one set of the fencing bodies 101 is lined up to extend from the shielding ground 40 to the lower surface 12 of the substrate 10 so as to surround the driver circuit 60. The fencing bodies 101 and the shielding ground 40 cooperate with each other to further suppress the stray electromagnetic wave radiation generated by the driver circuit 60 so as to enhance the suppressing ability of the antenna to suppress the stray electromagnetic wave radiation. Accordingly, the fencing bodies 101 are formed by metallization slot process.

Preferably, the distance between two adjacent fencing bodies 101 of the suppression fence 100 is less than or equal to 1/64 λ. Particularly, the distance between two adjacent fencing bodies 101 of the suppression fence 100 is less than or equal to 1/128 λ.

Preferably, at least one fencing body 101 is connected to the reference ground 50, wherein the fencing bodies 101, the shielding ground 40 and the reference ground 50 cooperate with each other to further suppress the stray electromagnetic wave radiation generated by the driver circuit 60.

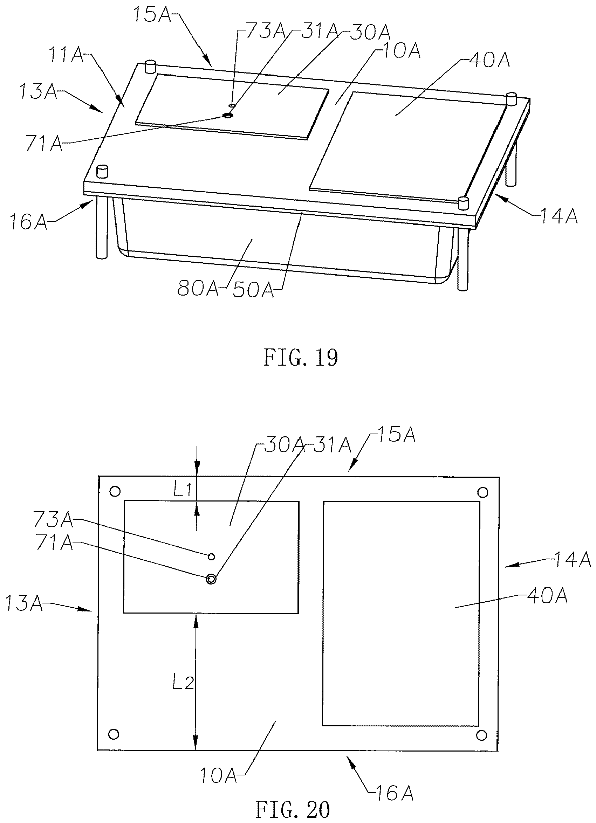

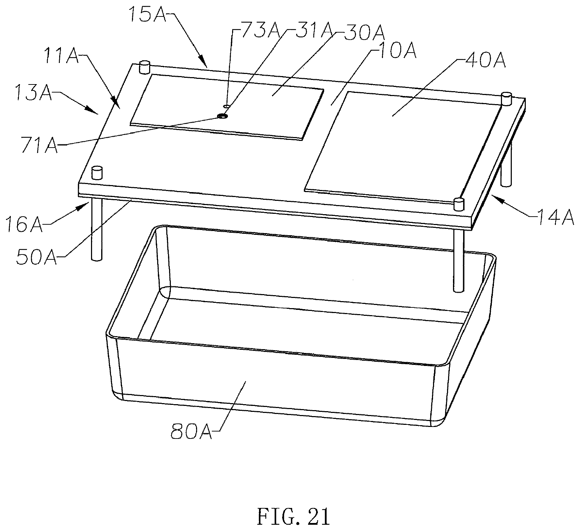

Referring to Figs. 19 to 23, an antenna according to a second embodiment of the present invention illustrates a modification of the above first embodiment of the present invention, wherein the antenna comprises a substrate 10A inherently forming a radiation slot 20A, a radiation source 30A, a shielding ground 40A, a reference ground 50A and a driver circuit 60A.

Particularly, the substrate 10A has an upper surface 11A and a corresponding lower surface 12A, wherein the radiation source 30A and the shielding ground 40A are positioned adjacent to each other and are retained at the upper surface 11A of the substrate 10A. Correspondingly, the reference ground 50A and the driver circuit 60A are positioned adjacent to each other and are retained at the lower surface 12A of the substrate 10A. The radiation source 30A has a feed point 31A electrically connected to the driver circuit 60A, so as to allow the driver circuit 60A providing a microwave excitation electrical signal to the radiation source 30A through the feed point 31A thereof. The radiation source 30A is electrically grounded.

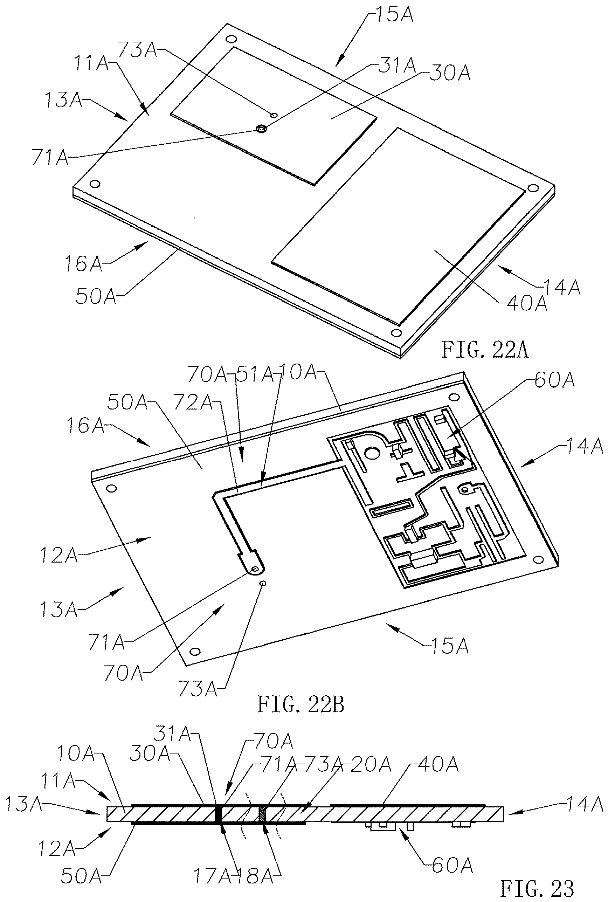

As shown in Fig. 23, the radiation source 30A and the reference ground 50A are aligned and located at two opposed surfaces of the substrate 10A respectively according to a vertical direction of antenna, i.e. a thickness direction thereof, such that the substrate 10A forms the radiation clearance 20A between the radiation source 30A and the reference ground 50A. Furthermore, when the driver circuit 60A provides the microwave excitation electrical signal to the radiation source 30A through the feed point 31A thereof, the radiation source 30A and the reference ground 50A cooperate with each other to allow the antenna generating radiated waves.

As shown in Fig. 23, the shielding ground 40A and the driver circuit 60A cooperate with each other according to the thickness direction of the antenna, wherein the shielding ground 40A is configured to suppress the stray electromagnetic wave radiation when the driver circuit 60A generates the microwave excitation electric signal, so as to reduce the interference during the operation of the antenna.

In addition, according to the above second embodiment as shown in Figs. 19 to 23, the radiation source 30 is electrically grounded, such that an impedance of the antenna can be lowered to narrow a bandwidth of the antenna, so as to suppress the radiation waves in adjacent frequency bands or stray wave interference. Preferably, the projecting area of the radiation source 30A on the substrate 10A is formed parallel to and is located within the projecting area of the reference ground 50A on the substrate 10, in such a manner that the detection area of the antenna will be increased.

Preferably, the projecting area of the driver circuit 60A on the substrate 10A is formed parallel to and is located within the projecting area of the shielding ground 40A on the substrate 10A, in such a manner that the shielding ground 40A can effectively suppress the stray electromagnetic wave radiation when the driver circuit 60A generates the microwave excitation electric signal, so as to reduce the interference during the operation of the antenna.

Furthermore, the driver circuit 60A is encircled by the reference ground 50A that the reference ground 50A surrounds four peripheral sides of the driver circuit 60A to further increase the area of the reference ground 50A so as to further increase the detection area of the antenna.

It is worth mentioning that, in the above second embodiment as shown in Figs. 19 to 23, the substrate 10A of the antenna is provided to enable the radiation source 30A coupling at the upper surface 11A of the substrate 10A and the reference ground 50A coupling at the lower surface 12A of the substrate 10A. Therefore, the thickness of the antenna can be minimized to form a compact and ultra-thin antenna structure. At the same time, the material of the antenna can be substantially reduced and the manufacturing process of the antenna can be further simplified so as to reduce the manufacturing cost of the antenna of the present invention.

Further, referring to Figs. 19 to 23, the substrate 10A has a rectangular shape according to the above second embodiment of the present invention, wherein the substrate 10A defines a longitudinal direction along a length direction and a transverse direction along a width direction. The substrate 10A further has two end portions along the length direction and two side portions along the width direction. Particularly, the two end portions of the substrate 10A include a first end portion 13A and a second end portion 14A. The two side portions of the substrate 10A include a first side portion 15A and a second side portion 16A. In other words, the first end portion 13A and the second end portion 14A are respectively formed at two opposed edge portions of the substrate 10A along the length direction thereof. The first side portion 15A and the second side portion 16A are formed at two opposed edge portions of the substrate 10A respectively along the width direction thereof. The radiation source 30A and the reference ground 50A are correspondingly retained at the substrate 10 at the first end portion 13A thereof. Correspondingly, the shielding ground 40A and the driver circuit 60A are correspondingly retained at the substrate 10A at the second end portion 14A thereof.

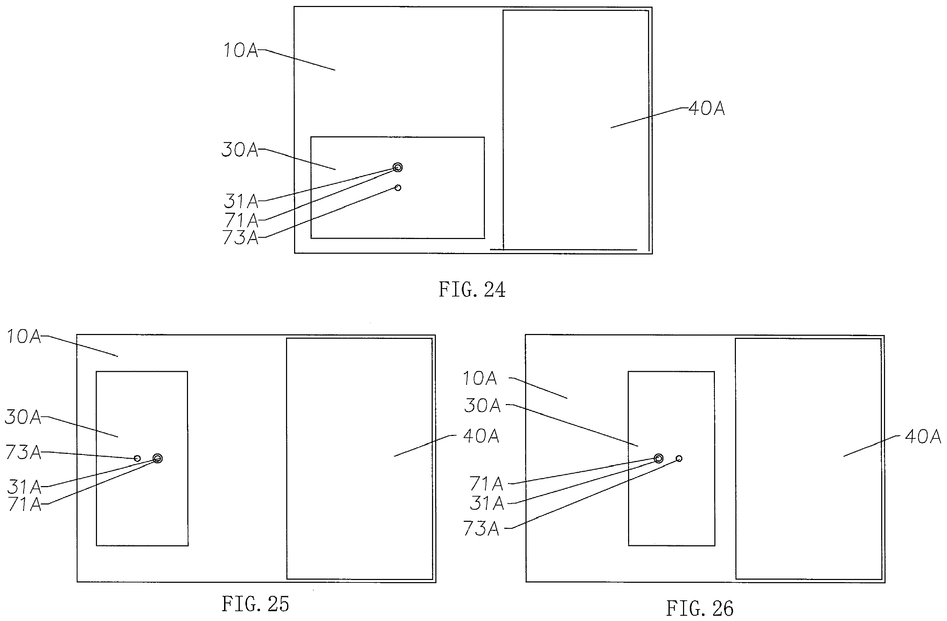

Preferably, as shown in Figs. 19 to 23 of the above second embodiment, the length direction of the shielding ground 40A is extended aligning with the width direction of the substrate 10A. A polarization direction of the radiation source 30A is aligned with the width direction of the substrate 10A, wherein a central axis of the radiation source 30A along the length direction thereof (a straight line passing through a physical midpoint of the radiation source 30A and aligning with the length direction thereof) is offset from the central axis of the substrate 10A along the length direction (a straight line passing through a physical midpoint of the substrate 10 and aligning with the length direction thereof). Therefore, the radiation source 30A is retained at a position near the edge of the substrate 10A and located at the first end portion 13A of the substrate 10A. In the second preferred embodiment as an example as shown in Figs. 19 to 23, the radiation source 30A is located adjacent to the first side portion 15A of the substrate 10A. Alternatively, as shown in Fig. 24, the radiation source 30A is located adjacent to the second side portion 16A of the substrate 10A.

Particularly, as shown in Fig. 20, a distance between the edge of the radiation source 30A and the edge of the first side portion 15A of the substrate 10A is set as parameter L1, wherein the range of the parameter L1 is preferably 0 ≤ L1 ≤ 1/4 λ. A distance between the edge of the radiation source 30A and the edge of the second side portion 16A of the substrate 10A is set as parameter L2, wherein the parameter L2 ranges from L2 ≥ 1/16 λ, where λ is the wavelength of the radiation wave of the antenna.

Fig. 25 illustrates a second alternative mode of the antenna according to the second preferred embodiment of the present invention, wherein the structural differences between the second alternative mode as shown in Fig. 25 and the preferred embodiment in Figs. 19 to 23 are that the polarization direction of the radiation source 30A is aligned with the width direction of the substrate 10A and the radiation source 30A is located away from the shielding ground 40A. The difference between the antenna as shown in the Fig. 25 and the antenna of a third alternative mode as shown Fig. 26 is that the radiation source 30A is located close to the shielding ground 40A.

As shown in Figs. 19 to 23, the substrate 10A further has a conductive slot 17A which is a through slot extended between the upper surface 11A of the substrate 10A and the lower surface 12A of the substrate 10A. The reference ground 50A has a conductive groove 51A formed at the lower surface 12A of the substrate 10A and extended from an edge of the reference ground 50A to a mid-portion of the reference ground 50A, wherein the conductive slot 17A of the substrate 10A is communicated with the conductive groove 51A of the reference ground 50A. The antenna further comprises a conductive module 70A which comprises a bridging conductive member 71A and an extending conductive member 72A. The bridging conductive member 71A is formed at the conductive slot 17A and is extended from the feed point 31A of the radiation source 30A to the lower surface 12A of the substrate 10A, that is bridging between the feed point 31A of the radiation source 30A and the lower surface 12A of the substrate 10A. The extending conductive member 72A is extended at the conductive groove 51, wherein the extending conductive member 72A has two ends electrically extended to the bridging conductive member 71A at the lower surface 12A of the substrate 10A and the driver circuit 60A respectively, such that the driver circuit 60A is electrically connected to the feed point 31A of the radiation source 30A via the bridging conductive member 71A and the extending conductive member 72A. Therefore, the driver circuit 60A is able to provide the microwave excitation electrical signal to the radiation source 30A through the feed point 31A thereof along the path of the extending conductive member 72A and the bridging conductive member 71A orderly.

The substrate 10A further has a ground connecting slot 18A which is a through slot extended between the upper surface 11A of the substrate 10A and the lower surface 12A thereof. The conductive module 70A further comprises a ground member 73A extended through the ground connecting slot 18A of the substrate 10A, wherein the ground member 73A has two ends connecting to the radiation source 30A and the reference ground 50A respectively, such that the radiation source 30A is electrically grounded via the connection of the ground member 73A to the radiation source 30A and the reference ground 50A.

Preferably, the ground member 73A is coupled at the physical midpoint of the radiation source 30A, such that the physical midpoint of the radiation source 30A is electrically grounded. It is worth mentioning that the ground member 73A is formed by the metallization slot process.

As shown in Figs. 19 to 23, the substrate 10A further comprises a shielding cover 80A coupled at the lower surface 12A of the substrate 10A, wherein the driver circuit 60A is enclosed by the shielding cover 80A, such that the shielding cover 80A is configured to suppress the stray electromagnetic waves generated by the driver circuit 60A respectively. Preferably, the shielding cover 80A is arranged to further enclose at least a portion of the reference ground 50A to configure the shielding cover 80A at the lower surface 12A of the substrate 10A in a convenient manner. In one embodiment, the shielding cover 80A is soldered at the lower surface 12A of the substrate 10A in such a manner that the shielding cover 80A is able to cover the reference 50A after the shielding cover 80A is soldered at the lower surface 12A of the substrate 10A.

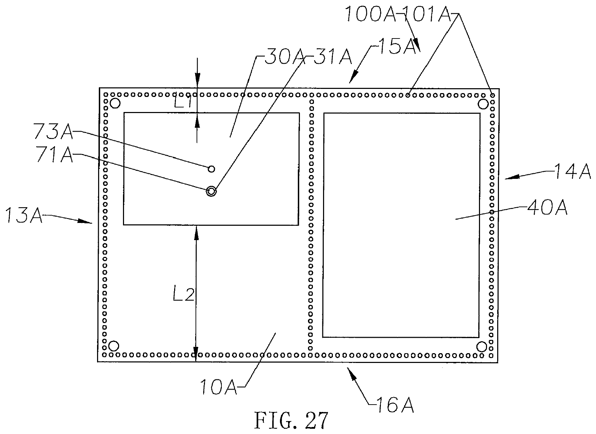

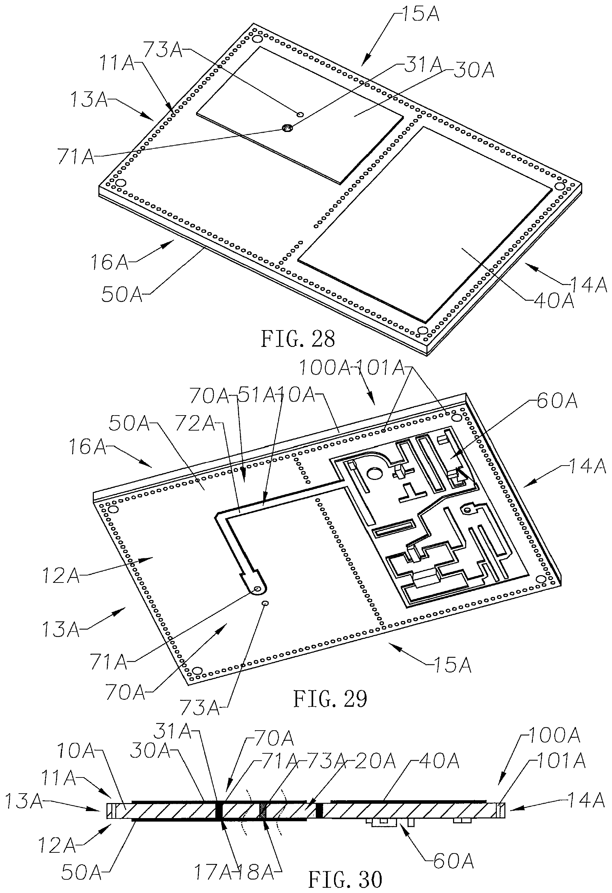

Figs. 27 to 30 illustrate a fourth alternative mode of the antenna according to the above second preferred embodiment, the difference between the antenna as shown in Figs. 19 to 23 and the antenna as shown in Figs. 27 to 30 is that the antenna according to the fourth alternative mode further comprises a suppression fence 100A. The driver circuit 60A is encircled within the suppression fence 100A to suppress the stray electromagnetic radiation generated by the driver circuit 60A.

Accordingly, the suppression fence 100A comprises a plurality of fencing bodies 101A spaced apart from each other and aligned with each other to form on the upper surface 11A and the lower surface 12A of the substrate 10A, wherein the fencing bodies 101A are lined up to surround the driver circuit 60A. The fencing bodies 101A and the shielding ground 40A cooperate with each other to further suppress the stray electromagnetic wave radiation generated by the driver circuit 60A so as to enhance the suppressing ability of the antenna to suppress the stray electromagnetic wave radiation. Accordingly, the fencing bodies 101A are formed by metallization slot process.

Preferably, the distance between the fencing bodies 101A of the suppression fence 100A on the upper surface 11A of the substrate 10A and the shielding ground 40A is less than or equal to 1/128λ. Particularly, fencing bodies 101A of the suppression fence 100A are spaced apart with each other and are lined up to surround the shielding ground 40A and to further extend to the lower surface 12A of the substrate 10A. In other words, the fencing bodies 101A of the suppression fence 100A are electrically extended to the shielding ground 40A.

Preferably, the distance between two adjacent fencing bodies 101A of the suppression fence 100A is less than or equal to 1/64 λ. Particularly, the distance between two adjacent fencing bodies 101A of the suppression fence 100A is less than or equal to 1/128 λ.

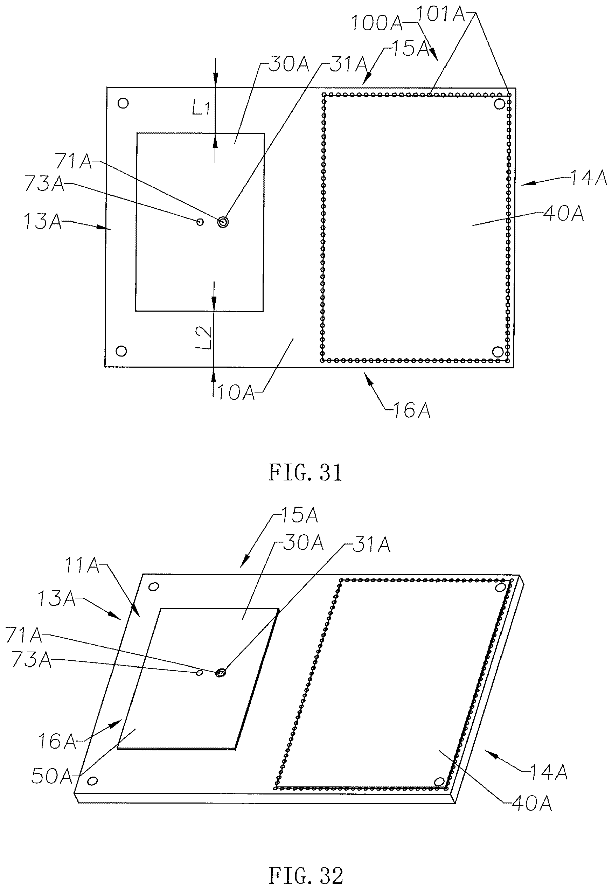

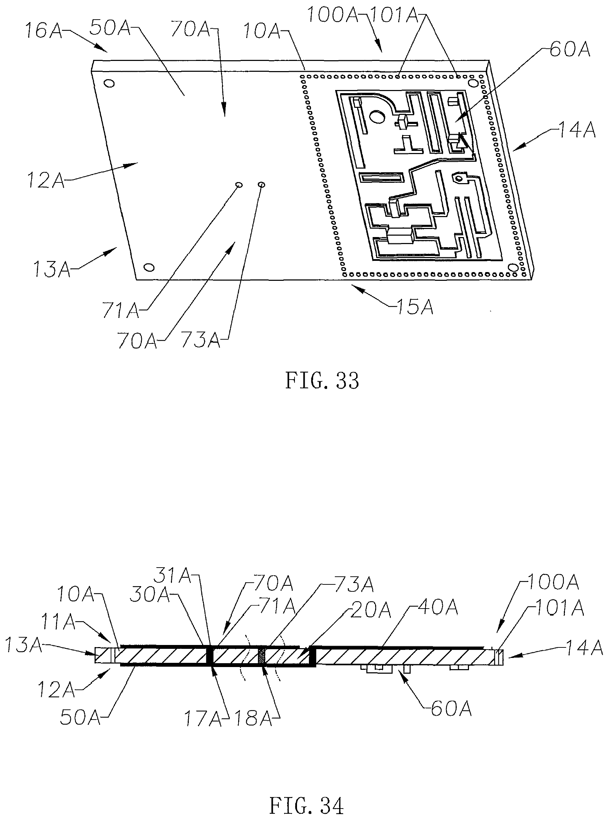

Furthermore, Figs. 31 to 34 illustrate a modification of the fourth alternative mode of the antenna according to the above second preferred embodiment, the difference between the antenna as shown in Figs. 27 to 30 and the antenna as shown in Figs. 31 to 34 is that the antenna as shown in Figs. 31 to 34 illustrates at least one fencing body 101A electrically connected between the shielding ground 40A and the reference ground 50A, wherein the fencing bodies 101A, the shielding ground 40A and the reference ground 50A cooperate with each other to further suppress the stray electromagnetic wave radiation generated by the driver circuit 60A. Through the electrically conductive connection of the fencing bodies 101A between the shielding ground 40A and the reference ground 50A, the shielding ground 40A is further extended from the reference ground 50A to increase the gain of the antenna.

As shown in Figs. 27 to 30, the radiation source 30A is surrounded by the suppression fence 100A to enhance the suppression effect of suppressing stray electromagnetic wave radiation generated by the driver circuit 60A. Particularly, the radiation source 30A is surrounded by the fencing bodies 101A of the suppression fence 100A which are extended from the upper surface 11A of the substrate 10A to the lower surface 12A thereof.

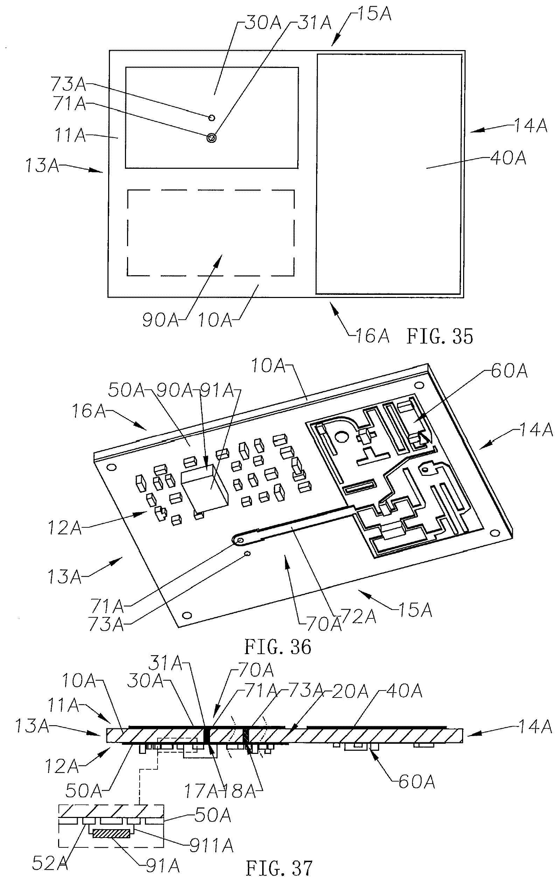

Figs. 35 to 37 illustrate a fifth alternative mode as a modification of the above second embodiment, wherein comparing to the antenna as shown in Figs. 19 to 23, the antenna as shown in Figs. 35 to 37 further comprises a processing circuit 90A formed on the lower surface 12A of the substrate 10A and electrically connected to the driver circuit 60A for processing the electrical signal of the driver circuit 60A. For example, the processing circuit 90A is configured to amplify the detection signal of the driver circuit 60A.

The processing circuit 90A comprises one or more electronic components 91A, wherein each of the electronic components 91A comprises at least two terminal connectors 911A. The reference ground 50A comprises at least one soldering pad 52A formed by removing a close loop portion of the reference ground 50A, such that the soldering pad 52A is spaced apart from the reference ground 50A. At least one of the terminal connectors 911A is connected to the soldering pad 52A, preferably by soldering, to retain the electronic component 91A on the substrate 10A. The processing circuit 90A is able to electrically connect the circuit of the substrate 10A via the terminal connector 911A connected to the substrate 10A and to electrically connect to the driver circuit 60A via the circuit of the substrate 10A. Preferably, the distance between the reference ground 50A and the soldering pad 52A is less than or equal to 1/64 λ.

As shown in Figs. 35 to 37, the projection area of the processing circuit 90A is located within the projection area of the reference ground 50A. Furthermore, the projection area of the processing circuit 90A and the projection area of the radiation source 30A are located at different regions of the projection area of the reference ground 50A.

For example, as shown in Figs. 35 to 37, the length of the shielding ground 40A is matched with the width of the substrate 10A. The length direction of the radiation source 30A is aligned with the length direction of the substrate 10A, wherein the radiation source 30A is positioned close to the first side portion 15A of the substrate 10A. The length direction of the processing circuit 90A is aligned with the length direction of the substrate 10A, and the processing circuit 90A is positioned close to the second side portion 16A of the substrate 10A.

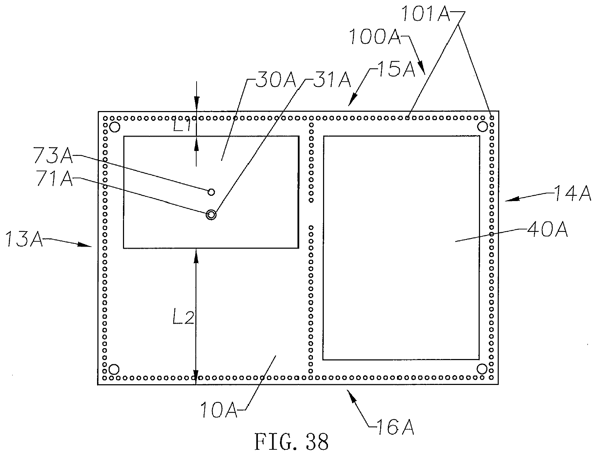

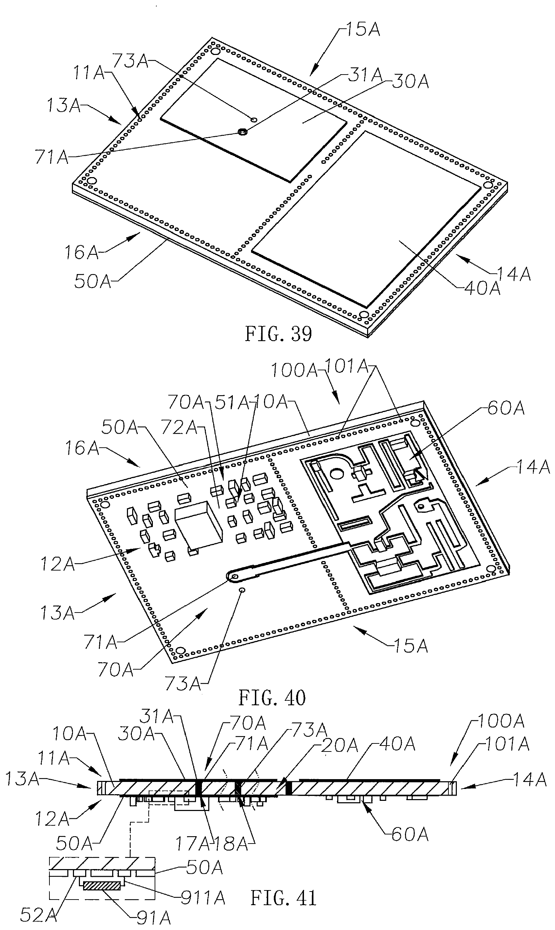

Figs. 38 to 41 illustrate a sixth alternative mode of the above second preferred embodiment, wherein the difference between the antenna in Figs. 35 to 37 and the antenna in Figs. 38 to 41 is that the antenna in Figs. 38 to 41 further comprises a suppression fence 100A. The driver circuit 60A, the radiation source 30A, and the processing circuit 90A are encircled within the suppression fence 100A to suppress the stray electromagnetic radiation generated by the driver circuit 60A and the processing circuit 90A.

The present invention further provides an anti-interfering method for the antenna for suppressing the stray electromagnetic wave radiation generated by the driving circuit 60A of the antenna, wherein the anti-interfering method comprises the following steps.
(A) According to the thickness direction of the antenna, retain the radiation source 30A and the reference ground 50A at the upper surface 11A and the lower surface 12A of the substrate 10A respectively corresponding to the first end portion 13A of the substrate 10A, so as to enable the radiation source 30A and the reference ground 50A being cooperated with each other.
(B) According to the thickness direction of the antenna, retain the shielding ground 40A and the driver circuit 60A at the upper surface 11A and the lower surface 12A of the substrate 10A respectively corresponding to the second end portion 14A of the substrate 10A, so as to enable the shielding ground 40A and the driver circuit 60A being cooperated with each other. Furthermore, when the driver circuit 60A provides the microwave excitation electrical signal to the radiation source 30A through the feed point 31A thereof for enabling the antenna to generate the radiation wave, the shielding ground 40A is able to effectively suppress the stray electromagnetic radiation generated by the driver circuit 60A.

Furthermore, in the above method, the projecting area of the driver circuit 60A on the substrate 10A is formed parallel to and is located within the projecting area of the shielding ground 40A on the substrate 10A, in such a manner that the shielding ground 40A can effectively suppress the stray electromagnetic wave radiation.

One skilled in the art will understand that the embodiment of the present invention as shown in the drawings and described above is exemplary only and not intended to be limiting. It will thus be seen that the objects of the present invention have been fully and effectively accomplished. The embodiments have been shown and described for the purposes of illustrating the functional and structural principles of the present invention and is subject to change without departure from such principles. Therefore, this invention includes all modifications encompassed within the spirit and scope of the following claims.

## Claims

1. An antenna, comprising:
a substrate forming a radiation clearance and having an upper surface and a lower surface;
a radiation source having a feed point, wherein said radiation source is retained at said upper surface of said substrate;
a shielding ground retained at said upper surface of said substrate and spaced apart said radiation source;
a driver circuit electrically connected to said feed point of said radiation source, wherein said driver circuit is retained at said lower surface of said substrate and is aligned with said shielding ground at said upper surface of said substrate for allowing said shielding ground suppressing stray electromagnetic radiation generated by said driver circuit; and
a reference ground retained at said lower surface of said substrate, wherein said reference ground at said lower surface of said substrate is aligned with said radiation source at said upper surface of said substrate, such that said substrate is formed between said radiation source and said reference ground to form said radiation clearance therebetween.

2. The antenna, as recited in claim 1, further comprising a conductive module which comprises a board-through conductive member extended from said feed point of said radiation source to said lower surface of said substrate and an extending conductive member having two ends electrically connected to said board-through conductive member and said driver circuit respectively.

3. The antenna, as recited in claim 2, wherein said reference ground has a conductive groove formed at said lower surface of the substrate, wherein said extending conductive member is retained at said conductive groove of said reference ground.

4. The antenna, as recited in claim 1, wherein said driver circuit is encircled by said reference ground.

5. The antenna, as recited in claim 1, wherein said radiation source is electrically grounded.

6. The antenna, as recited in claim 1, wherein said radiation source is electrically connected to said reference ground, such that said radiation source is electrically grounded.

7. The antenna, as recited in claim 1, further comprising a processing circuit which comprises at least one electronic component, wherein said reference ground comprises at least a soldering pad that said electronic component is electrically connected to said soldering pad so as to electrically connect to said driver circuit.

8. The antenna, as recited in claim 1, further comprising a suppression fence which comprises a plurality of fencing bodies spaced apart from each other and aligned with each other, wherein said fencing bodies are lined up to extend from said shielding ground to said lower surface of said substrate so as to surround said driver circuit.

9. The antenna, as recited in claim 8, wherein said fencing bodies are spacedly lined up to extend from said reference ground to said upper surface of said substrate.

10. The antenna, as recited in claim 8, wherein at least one of said fencing bodies is electrically connected to said reference ground.

11. The antenna, as recited in claim 1, wherein only one said substrate is provided between said radiation source and said reference ground to inherently form said radiation clearance via a thickness of said substrate.

12. The antenna, as recited in claim 2, wherein said reference ground has a receiving chamber and an opening groove extended from said receiving chamber on said lower surface of said substrate, wherein said driver circuit is formed within said receiving chamber of said reference ground.

13. The antenna, as recited in claim 12, wherein said extending conductive member is extended along said opening groove of said reference ground to electrically connect to said driver circuit.

14. The antenna, as recited in claim 2, wherein said substrate has a conductive slot which is through slot extended between said upper surface of said substrate and said lower surface thereof, wherein said board-through conductive member is extended from said feed point of said radiation source to said lower surface of said substrate through said conductive slot thereof.

15. The antenna, as recited in claim 1, further comprising a shielding cover coupled at said lower surface of said substrate, wherein said driver circuit is enclosed by said shielding cover.
